# EUROPEAN PATENT APPLICATION

(11) **EP 4 632 563 A1**
(43) Date of publication of application: **15.10.2025**
(21) Application number: 23899931.2
(22) Date of filing: 04.12.2023
(51) Int. Cl.: G06F 9/451, G06F 3/04842, H04M 1/72469

(54) **ASSOCIATION INFORMATION DISPLAY METHOD AND APPARATUS, DEVICE, STORAGE MEDIUM, AND PROGRAM PRODUCT**

(30) Priority: 06.12.2022 CN 202211559316
(71) Applicant: Beijing Zitiao Network Technology Co., Ltd., Beijing 100190 (CN)
(72) Inventor: XU, Qi, Beijing 100028 (CN); LU, Yan, Beijing 100028 (CN)
(74) Representative: Isarpatent
(86) International application number: PCT/CN2023/136256
(87) International publication number: WO 2024/120355

(57) **Abstract**

The present disclosure relates to an association information display method, apparatus, device, storage medium and program product. The method comprises: displaying a target effect in a media content editing interface; obtaining one or more object identification corresponding to candidate users associated with the target effect, and displaying the one or more object identifications in the media content editing interface; determining, in response to a selection operation of a current user, a candidate user corresponding to at least one selected object identification as a target user; and displaying association information of the one or more target users in the target effect in the media content editing interface.

## Description

### CROSS-REFERENCE TO RELATED APPLICATION(S)

This disclosure claims priority to Chinese Application No. 202211559316.5 filed on December 6, 2022 and entitled "association information display method and apparatus, device, storage medium and program product", the disclosure of which is incorporated herein by reference in its entirety.

### FIELD

The present disclosure relates to the field of computer technology, and in particular, to an association information display method, apparatus, device, storage medium and program product.

### BACKGROUND

With the rapid development of Internet technology and terminal devices, various terminal devices such as mobile phones and tablet computers have become an indispensable part in people's work and life, and functions of media software installed in intelligent terminals get increasingly powerful.

At present, a multimedia content may be edited through multimedia software installed in an intelligent terminal. In order to enhance interaction of the multimedia content, a variety of object elements may be added in a media content screen during editing the media content, wherein the object elements comprise: effect props, pictures, art characters, etc.

### SUMMARY

In order to solve the foregoing technical problem, embodiments of the present disclosure provide an association information display method, apparatus, device, storage medium and program product. Association information of a target user associated with a current user is displayed in a media content editing interface during editing the media content, thereby realizing interaction with other users and enhancing interactivity.

In a first aspect, an embodiment of the present disclosure provides an association information display method, comprising:
displaying a target effect in a media content editing interface;
obtaining one or more object identifications corresponding to candidate users associated with the target effect, and displaying the one or more object identifications in the media content editing interface;
determining, in response to a selection operation of a current user, a candidate user corresponding to at least one selected object identification as a target user; and
displaying association information of the one or more target users in the target effect in the media content editing interface.

In a second aspect, an embodiment of the present disclosure further provides an association information display apparatus, comprising:
a target effect display module configured to display a target effect in a media content editing interface;
an object identification display module configured to obtain one or more object identifications corresponding to candidate users associated with the target effect, and display the one or more object identifications in the media content editing interface;
a target user determining module configured to determine, in response to a selection operation of a current user, a candidate user corresponding to at least one selected object identification as a target user; and
an association information display module configured to display association information of the one or more target users in the target effects in the media content editing interface.

In a third aspect, an embodiment of the present disclosure provides an electronic device, comprising:
one or more processors;
a storage unit configured to store one or more programs,
wherein the one or more programs, when executed by the one or more processors, cause the one or more processors to implement an association information display method as described in the first aspect of the present disclosure.

In a fourth aspect, an embodiment of the present disclosure provides a computer readable storage medium storing a computer program thereon, the program, when executed by a processor, implementing an association information display method as described in the first aspect of the present disclosure.

In a fifth aspect, an embodiment of the present disclosure provides a computer program product, comprising computer programs or instructions, wherein the computer programs or instructions, when executed by a processor, implement an association information display method as described in the first aspect of the present disclosure.

The embodiments of the present disclosure provide an association information display method, apparatus, device, storage medium and program product. The method comprises: displaying a target effect in a media content editing interface; obtaining one or more object identifications corresponding to candidate users associated with the target effect, and displaying the one or more object identifications in the media content editing interface; determining, in response to a selection operation of a current user, a candidate user corresponding to at least one selected object identification as a target user; and displaying association information of the one or more target users in the target effect in the media content editing interface.

### BRIEF DESCRIPTION OF THE DRAWINGS

Through the more detailed description of detailed implementations with reference to the accompanying drawings, the above and other features, advantages and aspects of respective embodiments of the present disclosure will become more apparent. The same or similar reference numerals represent the same or similar elements throughout the figures. It should be understood that the figures are merely schematic, and components and elements are not necessarily drawn scale.
FIG. 1 illustrates a schematic diagram of a system which may be used to implement an association information display method provided by an embodiment of the present disclosure
FIG. 2 illustrates a schematic flowchart of an association information display method according to an embodiment of the present disclosure;
FIG. 3 illustrates a schematic diagram of a media content editing interface according to an embodiment of the present disclosure;
FIG. 4 illustrates a schematic diagram of an effect topic editing interface according to an embodiment of the present disclosure;
FIG. 5a illustrates a schematic diagram of a user interaction message display interface according to an embodiment of the present disclosure;
FIG. 5b illustrates a schematic diagram of a user interaction message display interface according to an embodiment of the present disclosure;
FIG. 6 illustrates a structural schematic diagram of an association information display apparatus according to an embodiment of the present disclosure; and
FIG. 7 illustrates a structural schematic diagram of an electronic device according to an embodiment of the present disclosure.

### DETAILED DESCRIPTION OF EMBODIMENTS

The embodiments of the present disclosure will be described in more detail with reference to the accompanying drawings, in which some embodiments of the present disclosure have been illustrated. However, it should be understood that the present disclosure can be implemented in various manners, and thus should not be construed to be limited to embodiments disclosed herein. On the contrary, those embodiments are provided for the thorough and complete understanding of the present disclosure. It should be understood that the drawings and embodiments of the present disclosure are only used for illustration, rather than limiting the protection scope of the present disclosure.

It should be understood that various steps described in method implementations of the present disclosure may be performed in a different order and/or in parallel. In addition, the method implementations may comprise an additional step and/or omit a step which is shown. The scope of the present disclosure is not limited in this regard.

The term "comprise" and its variants used herein are to be read as open terms that mean "include, but is not limited to." The term "based on" is to be read as "based at least in part on." The term "one embodiment" are to be read as "at least one embodiment." The term "another embodiment" is to be read as "at least one other embodiment." The term "some embodiments" are to be read as "at least some embodiments." Other definitions will be presented in the description below.

Note that the concepts "first," "second" and so on mentioned in the present disclosure are only for differentiating different apparatuses, modules or units rather than limiting the order or mutual dependency of functions performed by these apparatuses, modules or units.

Note that the modifications "one" and "a plurality" mentioned in the present disclosure are illustrative rather than limiting, and those skilled in the art should understand that unless otherwise specified, they should be understood as "one or more."

Names of messages or information interacted between a plurality of apparatuses in the implementations of the present disclosure are merely for the illustration purpose, rather than limiting the scope of these messages or information.

It is to be understood that, before applying the technical solutions disclosed in various embodiments of the present disclosure, the user should be informed of the type, scope of use, and use scenario of the personal information involved in the present disclosure in an appropriate manner in accordance with relevant laws and regulations, and user authorization should be obtained.

For example, in response to receiving an active request from the user, prompt information is sent to the user to explicitly inform the user that the requested operation would acquire and use the user's personal information. Therefore, according to the prompt information, the user may decide on his/her own whether to provide the personal information to the software or hardware, such as electronic devices, applications, servers, or storage media that perform operations of the technical solutions of the present disclosure.

As an optional but non-limiting implementation, in response to receiving an active request from the user, the way of sending the prompt information to the user may, for example, include a pop-up window, and the prompt information may be presented in the form of text in the pop-up window. In addition, the pop-up window may also carry a select control for the user to choose to "agree" or "disagree" to provide the personal information to the electronic device.

It is to be understood that the above process of notifying and obtaining the user authorization is only illustrative and does not limit the implementations of the present disclosure. Other methods that satisfy relevant laws and regulations are also applicable to the implementations of the present disclosure.

It is to be understood that data involved in the present technical solution (including but not limited to the data itself, the acquisition or use of the data) should comply with requirements of corresponding laws and regulations and relevant rules.

The embodiments of the present disclosure will be illustrated in detail with reference to the figures. It is to be noted that the same reference numerals in different figures will be used to represent the same described elements.

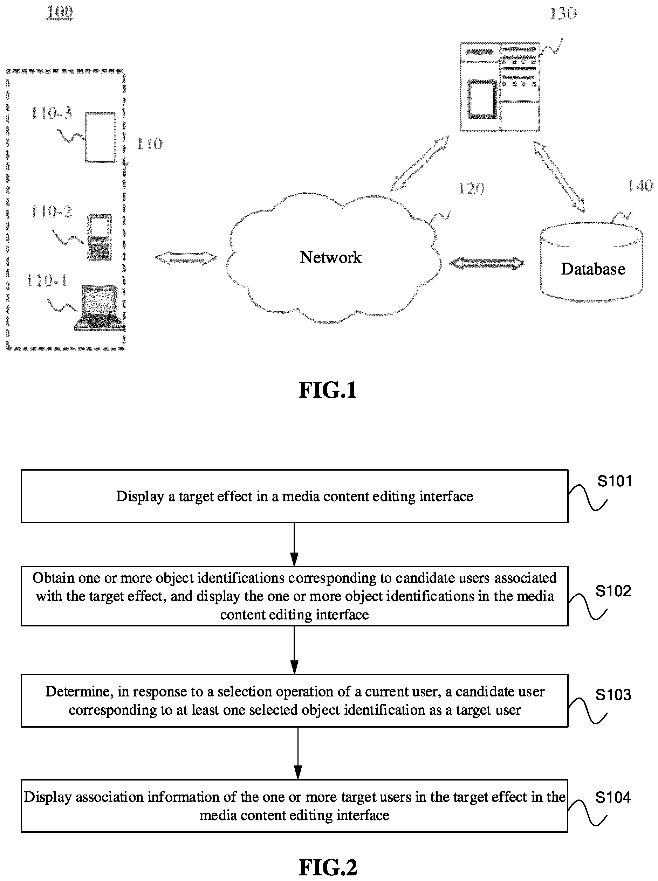

FIG. 1 is a schematic diagram of a system which may be used to implement an association information display method provided by an embodiment of the present disclosure. As depicted, the system 100 may comprise a plurality of user terminals 110, a network 120, a server 130 and a database 140. For example, the system 100 may be used to implement an association information display method as described in any of the embodiments of the present disclosure.

It may be understood that the user terminal 110 may be any other type of electronic device capable of performing data processing, which may include, without limitation to: a mobile phone, a site, a unit, a device, a multimedia computer, a multimedia tablet, an Internet node, a communicator, a desktop computer, a laptop computer, a notebook computer, a netbook computer, a tablet computer, a personal communication system (PCS) device, a personal navigation device, a personal digital assistant (PDA), an audio/video player, a digital camera/camcorder, a positioning device, a television receiver, a radio broadcast receiver, an e-book device, a gaming device or any combination thereof, including accessories and peripherals of such devices or any combination thereof.

The user may perform an operation through an application installed on the user terminal 110, the application sends user behavior data to the server 130 via the network 120, and the user terminal 110 may receive, via the network 120, the data transmitted by the receiver 130. The embodiments of the present disclosure are not intended to limit a hardware system or a software system of the user terminal 110. For example, the user terminal 110 may be a processor based on ARM, X86 etc., may comprise an input/output device such as a camera, a touch screen, a microphone and so on, and may run an operating system such as Windows, iOS, Linux, Android, and Hongmeng OS.

For example, the application on the user terminal 110 may be a video application, e.g., a video application based on a multimedia resource such as video, pictures, text, etc. Taking a video application based on a multimedia application such as videos, pictures and text as an example, the user may perform video recording and posting through the video application on the user terminal 110, and meanwhile, may view or browse videos posted by other users, and may perform operations such as liking, commenting and reposting.

The user terminal 110 may implement the association information display method provided by the embodiments of the present disclosure by running a process or thread. In some examples, the user terminal 110 may perform the association information display method through an application built therein. In other examples, the user terminal 110 may perform the association information display method by calling an application stored externally to the user terminal 110.

The network 120 may be a single network or a combination of at least two different networks. For example, the network 120 may include, without limitation to, one or a combination of a local area network, a wide area network, a public network, a private network, and the like. The network 120 may be a computer network such as the Internet and/or various telecommunication networks (e.g., 3G/4G/5G mobile communication networks, WIFI, Bluetooth, ZigBee, etc.), which is not limited in the embodiments of the present disclosure.

The server 130 may be an individual server, or a group of servers, or a cloud server, and each server in the group of servers is connected via a wired or wireless network. A group of servers may be centralized, such as a data center, or distributed. The server 130 may be local or remote. The server 130 may communicate with the user terminal 110 via a wired or wireless network. The embodiments of the present disclosure do not limit the hardware system and software system of the server 130.

The database 140 may refer to in general a device with storage functionality. The database 140 is mainly used to store various data utilized, generated and output by the user terminal 110 and the server 130 in their work. For example, taking the above video application based on a multimedia resource such as videos, pictures and audios as an example of the application on the user terminal 110, data stored in the database 140 may comprise resource data such as videos and audios uploaded by the user through the user terminal 110, as well as interactive operation data such as likes, comments and popularity.

The database 140 may be local or remote. The database 140 may comprise various memories, such as random-access memory (RAM), read only memory (ROM), and the like. The storage devices mentioned above merely enumerate some examples, whereas the storage devices which may be used by the system 100 are not limited thereto. The embodiments of the present disclosure are not intended to limit the hardware system or the software system of the database 140, which may be, for example, a relational database or a non-relational database.

The database 140 may be interconnected or in communication with the server 130 or a portion thereof via the network 120, or directly interconnected or in communication with the server 130, or a combination of these two approaches.

In some example, the database 140 may be a stand-alone device. In other examples, the database 140 may also be integrated in at least one of the user terminal 110 and the server 130. For example, the database 140 may be provided on the user terminal 110 or on the server 130. For another example, the database 140 may further be distributed, with one portion provided on the user terminal 110 and another portion provided on the server 130.

FIG. 2 is a flowchart of an association information display method in an embodiment of the present disclosure. This embodiment may be applicable in the case of adding association information of other users in the media content editing interface. The method may be performed by an association information display apparatus, which may be implemented as software and/or hardware. The association information display method may be performed by the user terminal 110 as shown in FIG. 1.

As shown in FIG. 2, the association information display method provided by the embodiment of the present disclosure mainly comprises S101 to S104.

S101, displaying a target effect in a media content editing interface.

In an implementation of the present disclosure, the media content may be a multimedia resource such as a picture, a video and live streaming. The media content editing page may be an interactive interface provided by an application or software on the user terminal 110, and the interactive interface may be used as a display interface to present visual information of the media content to a current user (i.e., a user of the user terminal 110) and may further be used to receive an operation performed by the user in the interactive interface.

In an implementation of the present disclosure, taking a smart phone or tablet computer as an example of the user terminal 110, the media content editing page may occupy an entire display screen of the smart phone or tablet computer. In other words, the media content editing page is an entire display interface of the smart phone or tablet computer. For another example, taking a notebook computer as an example of the user terminal 110, the media content editing page may occupy an entire display screen of the notebook computer or only occupy a portion of the display screen of the notebook computer.

In an implementation of the present disclosure, the target effect may be understood as an effect selected by the current user and presented in the media content editing page. Further, media contents such as pictures, text, art characters and other relevant information may be added in one or more of areas in the target effect.

In an implementation of the present disclosure, the target effect comprises one or more association information display areas, which may be used to display still pictures, motion pictures, videos, text information, users' association information, etc.

In an implementation of the present disclosure, the target effect may be selected before presenting the media content editing interface, or may be selected and presented after presenting the media content editing page.

Specifically, after receiving a start instruction on a media content application, an application interface is displayed; in response to receiving an operation on the application interface, a target effect confirmation instruction is received; after receiving the effect confirmation instruction, a media content editing interface is displayed, and the target effect is displayed in the media content editing interface.

In the embodiments of the present disclosure, receiving the target effect confirmation instruction in response to an operation on the application interface comprises: in response to a trigger operation on a search control in the application interface, searching for the target effect in an effect library, displaying a confirmation control corresponding to the found target effect, and receiving the target effect confirmation instruction in response to a trigger operation on the confirmation control corresponding to the target effect.

In the embodiments of the present disclosure, receiving the target effect confirmation instruction in response to an operation on the application interface comprises: playing an effect video in the application interface, wherein the target effect is used in the effect video, and the application interface comprises a target effect identification; and receiving the target effect confirmation instruction in response to a trigger operation on the target effect identifications.

In the embodiments of the present disclosure, receiving the target effect confirmation instruction in response to an operation on the application interface comprises: displaying a media content editing interface in response to receiving a media content editing instruction; and determining that a target effect instruction is received, in response to a trigger operation on a target effect control comprised in the media content editing interface.

S102, obtaining one or more object identifications corresponding to candidate users associated with the target effect, and displaying the one or more object identifications in the media content editing interface.

In the embodiments of the present disclosure, the candidate user refers to a user having a preset association relationship with a current user. The object identification corresponding to the candidate user may comprise any one of: a profile photo of the candidate user, a name of the candidate user, a cover image of the candidate user. In the embodiments of the present disclosure, optionally, illustration is presented taking a profile photo of the candidate user as an example of the object identification corresponding to the candidate user.

In the embodiments of the present disclosure, the current user has a preset association relationship with the candidate user. The preset association relationship comprises one or more of: the candidate user and the current user following each other as friends, the candidate user following the current user, the current user following the candidate user, the candidate user being a user whose relevance to the current user exceeds a preset relevance threshold, the candidate user being a recommended friend for the current user, etc., wherein the candidate user and the current user following each other as friends means that the candidate user follows the current user and the current user follows the candidate user. In the embodiments of the present disclosure, illustration is presented taking the candidate user and the current user following each other as an example.

In the embodiments of the present disclosure, the candidate user is a user having a preset association relationship with the current user, so that a resulting target user has an association relationship with the current user, further enhancing the interactivity between friends.

In the embodiments of the present disclosure, association information of the user needs to be added in the target effect, and the candidate user associated with the target effect refers to a user who might display association information in an association information display area of the target effect.

In an implementation of the present disclosure, when displaying the target effect in the media content editing interface, one or more object identifications of candidate users associated with the target effect is obtained.

In the embodiments of the present disclosure, the candidate user may refer to all or part of users having a preset association relationship with the current user. If there is only one candidate user having a preset relationship with the current user, e.g., there is only one user mutually following the current user as friends, then the object identification of one candidate user is obtained.

In an implementation of the present disclosure, if the number of users having a preset association relationship with the current user exceeds a candidate threshold, then the first N users associated with the current user are obtained as candidate users, and object identifications of the N candidate users are obtained, wherein N is equal to the candidate threshold, e.g., N is equal to 50.

In an implementation of the present disclosure, if the number of candidate users having a preset relationship with the current user does not exceed a candidate threshold, then all users having a preset relationship with the current user are treated as candidate users, and object identifications corresponding to the candidate users are obtained.

In an implementation of the present disclosure, the media content editing interface comprises an object identification selecting area, which is used to display one or more object identifications. The object identification selecting area may display the one or more object identifications in the form of rows or in the form of a rectangle.

Further, when displayed in the form of rows, a plurality of object identifications may be controlled to move horizontally by being swiped leftward or rightward. Further, when displayed in the form of a rectangle, the plurality of object identifications may be controlled to move horizontally by being swiped leftward or rightward. The plurality of object identifications may be controlled to move vertically by being swiped upward or downward.

In an embodiment of the present disclosure, the object identification selecting area may be a panel area added on top of an effect selecting area comprised in the media content editing interface, or a panel added to directly cover the effect selecting area, or a mask area added in the media content editing interface as an object identification selecting area.

It is to be noted that the embodiments of the present disclosure merely illustrate the position or form of the object identification selecting area, rather than limiting.

S103, determining, in response to a selection operation of a current user, a candidate user corresponding to at least one selected object identification as a target user.

In an implementation of the present disclosure, the current user may be understood as a user currently performing media content editing with the user terminal (i.e., the user of the user terminal 110). The selection operation of the current user comprises the current user's operation of adding a candidate user, operation of deleting a candidate user, operation of adjusting the order of candidate users, etc., wherein the target user refers to a user selected by the current user whose association information will be displayed in the target effect.

In the embodiments of the present disclosure, in response to a selection operation of the current user, a candidate user corresponding to at least one object identification displayed in the media content editing interface is determined as a target user.

S104, displaying association information of the one or more target users in the target effect in the media content editing interface.

The association information comprises: a user profile photo and name, a target user profile photo, a target user profile photo and profile, a relevance to the current user, etc. In the embodiments of the present disclosure, illustration is presented taking a user profile photo and user name as an example of the association information of the target user.

In an implementation of the present disclosure, the association information of the target user is displayed in an association information display area of the target effect comprised in the media content editing interface.

In an implementation of the present disclosure, if the target effect comprises an association information display area, the association information of the target user is sequentially displayed in the association information display area. If the target effect comprises a plurality of association information display areas, then association information of different target users may be displayed in the plurality of association information display area.

In the embodiments of the present disclosure, at least one target user is obtained through the selection operation of the current user, and the association information of the target user is displayed in the media content editing interface, thereby realizing interaction between the current user and the target user and enhancing the interactivity of media content applications.

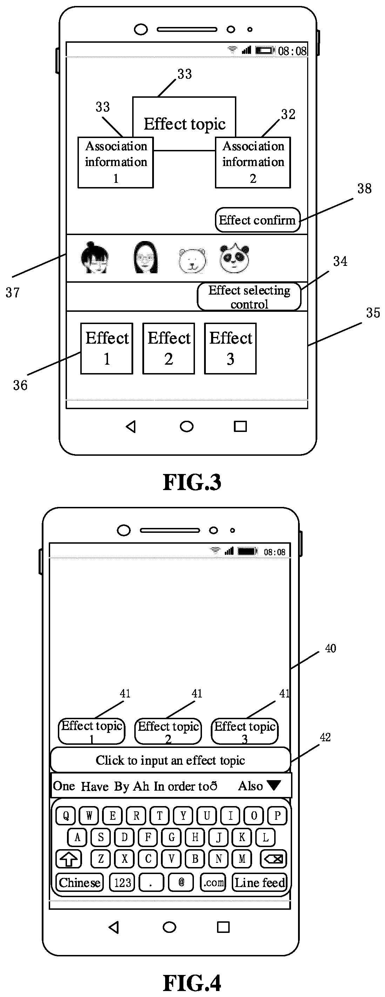

As shown in FIG. 3, the target effect comprises two association information display areas 31 and 32, at which point association information of two target users may be simultaneously displayed in the target effect in the media content editing interface. For example, association information of a target user 1 is displayed in the association information display area 31, and association information of a target user 2 is displayed in the association information display area 32.

In an implementation of the present disclosure, the association information of the target user displayed in the target effect varies with an interaction effect of the target effect. As an example, the interaction effect of the target effect may vary with time, and/or vary with a specified object (e.g., added music, etc.), and/or vary with an interaction operation of a user.

In the embodiments of the present disclosure, each effect has its distinct interaction effect, and the association information of the target user varies with an interaction effect of the target effect. For example, the interaction effect of the target effect is cartoon display, then the association information of the target user will be displayed after being subject to cartoon effect processing. For another example, if the interaction effect of the target effect is animation display, then the association information of the target user will be displayed in the form of an animation in the target effect after being subject to animation processing.

In the embodiments of the present disclosure, the association information is displayed along with the interaction effect of the target effect, to enhance the interactivity of the effect.

In an implementation of the present disclosure, displaying the association information of the one or more target users in the target effect in the media content editing interface comprises: displaying, within a preset time range, the association information corresponding to the one or more target users in the target effect in the media content editing interface.

The preset time range may be a fixed value, for example, the preset time range lasts two seconds. The preset time range may be set by the client background or by the current user, which is not limited in the embodiments of the present disclosure. The preset time rage may also be set based on the number of target users. The larger the number of target users, the smaller the preset time range; the smaller the number of target users, the larger the preset time range.

Specifically, the preset time range of 2 seconds is taken as an example for illustration. In 0 to 2 seconds, the association information of the target user 1 is displayed in the target effect of the media content editing interface, and in 2 to 4 seconds, the association information of the target user 2 is displayed in the target effect of the media content editing interface, and so on and so forth. After the association information corresponding to all the target users is displayed, the association information of the target user is displayed cyclically all over again, i.e., the association information is displayed in turn again starting from the association information of the target user 1.

In an implementation of the present disclosure, displaying the association information of the one or more target users in the target effect in the media content editing interface comprises: displaying the association information of the one or more target users in the target effect in the media content editing interface in response to receiving a preset trigger operation of the current user on the media content editing interface.

In the embodiments of the present disclosure, the preset trigger operation comprises a trigger operation on an association information display control comprised in the media content editing interface.

Specifically, in response to the preset trigger operation of the current user on an association information display control comprised in the media content editing interface, the association information of the one or more target users is displayed in the target effect according to the interaction effect of the target effect. For example, in response to detecting a user performing a preset swipe operation in the media content editing interface, the target user displayed in the target effect is switched for display accordingly.

In an implementation of the present disclosure, displaying the association information of the one or more target users in the target effect in the media content editing interface comprises: displaying the association information of the one or more target users in the target effect in the media content editing interface in response to a currently captured image satisfying a preset condition.

In the embodiments of the present disclosure, a captured image satisfying a preset condition comprises: people in the captured image making a specified action, or a specified object appearing in the captured image. For example, the specified action comprises one or more of: nodding, pouting, liking, clapping, etc., and the specified object comprises: a palm of a hand, a face, feet, or a tree, a car, etc.

In the embodiments of the present disclosure, the association information of the one or more target users is displayed in the target effect in the media content editing interface in response to people in a captured image making a specified action or a specified object appearing in a captured image.

For example, in response to people in the currently captured image making a nodding action, the association information of the target user 1 is displayed in the target effect of the media content editing interface; in response to people in the currently captured image making a blinking action, the association information of the target user 2 is displayed in the target effect of the media content editing interface, till the association information of all the target users is displayed.

In an implementation of the present disclosure, the method further comprises: displaying a topic selecting control and/or a topic input control associated with the target effect; determining a target topic in response to a trigger operation of a current user on the topic selecting control and/or the topic input control; and displaying the target topic in the target effect in the media content editing interface.

In the embodiments of the present disclosure, as shown in FIG. 3, the target effect displayed in the media content editing interface comprises an effect topic display area 33, wherein the effect topic display area 33 is used to display a topic of the target effect.

In an implementation of the present disclosure, an effect topic editing page is displayed in response to receiving a trigger operation of the current user on the effect topic display area 33. As shown in FIG. 3, the effect topic editing page displays a topic selecting control 41 and/or a topic input control 42 associated with the target effect. In the embodiments of the present disclosure, the topic selecting control 41 and the topic input control 42 may be simultaneously displayed, or only one of them may be displayed. In the embodiments of the present disclosure, the two controls being simultaneously displayed is taken as example for illustration.

As shown in FIG. 4, the one or more topic selecting controls 41 are displayed in the media content editing interface; in response to receiving a selection operation of the current user on one of the topic selecting controls 41, a topic corresponding to the selection operation is determined as a target topic.

As shown in FIG. 4, the topic input control 42 is displayed in the media content editing interface; in response to a trigger operation of the current user on the topic input control 42, a keyboard input panel is displayed; in response to an input operation of the current user on the keyboard input panel, text corresponding to the input operation is obtained and determined as a target topic.

In an implementation of the present disclosure, the target topic is displayed in the effect topic display area 23 comprised in the target effect.

In the embodiments of the present disclosure, the user may input or select a target effect topic, thereby increasing the adaptability between the target effect and the user.

An embodiment of the present disclosure provides an association information display method, comprising: displaying a target effect in a media content editing interface; obtaining one or more object identifications corresponding to candidate users associated with the target effect, and displaying the one or more object identifications in the media content editing interface; determining, in response to a selection operation of a current user, a candidate user corresponding to at least one selected object identification as a target user; and displaying association information of the one or more target users in the target effect in the media content editing interface. In the embodiment of the present disclosure, at least one target user is obtained through a selection operation of a current user, and association information of the target user is displayed in the media content editing interface, thereby realizing interaction between the current user and the target user and enhancing interactivity of media content applications.

Based on the foregoing embodiment, displaying association information of the one or more target users in the target effect in the media content editing interface, the association information display method provided by the embodiment of the present disclosure further comprises: obtaining a target media content by performing media content obtaining in response to receiving a media content obtaining instruction; posting the target media content in response to receiving a media content posting instruction; and in response to the target media content being successfully posted, triggering a generation of a user interaction message, and sending the user interaction message to the target user.

In the embodiments of the present disclosure, a plurality of users of different user terminals 110 (i.e., a plurality of users of different user terminals 110) perform online interaction operations between them to realize information interaction between the plurality of users. For example, data generated by the online interaction operation needs to be uploaded to and stored in the server 130 to realize data transmission and interaction between different user terminals 110 and the server 130.

In the embodiments of the present disclosure, the media content obtaining instruction may refer to an instruction of capturing or uploading a media content. The response to receiving the media content obtaining instruction may comprise: starting recording a media content in response to receiving a trigger operation of the current user on a start recording control in the media content editing interface; ending recording the media content in response to receiving a trigger operation of the current user on an end recording control in the media content editing interface; and obtaining a recorded target media content. Or the response to receiving the media content obtaining instruction may further comprise: obtaining a media content in response to a selection operation of the current user on a local media content. The target media content comprises a target effect, the target effect comprising association information of one or more target users.

In the embodiments of the present disclosure, the media content posting instruction refers to an instruction of uploading a target media content to the server so that the server distributes the target media content to other clients for viewing by other users.

In the embodiments of the present disclosure, the response to receiving the media content posting instruction comprises: in response to receiving a trigger operation of the current user on a media content posting control, uploading the target media content to the server so that the server distributes the target media content to other clients for viewing by other users.

In the embodiments of the present disclosure, after the client held by the current user uploads the target media content to the server, a posting success instruction is generated; after the server generates the posting success instruction, a user interaction message is generated, and the user interaction message is sent to a target user. The user interaction message is used to notify the target user that the current user has used a target effect in the target media content and the target effect comprises the target user.

In other embodiments, after the client held by the current user uploads the target media content to the server, a posting success instruction may be further generated; after the server generates the posting success instruction, the posting success instruction is sent to a client held by the current user; the client held by the current user generates a user interaction message and sends the same to the target user.

In the embodiments of the present disclosure, the target user will receive the user interaction message, thereby facilitating to increase the interaction result of effect creating.

Specifically, the user interaction message is displayed in the form of a mention notification in a message notification page of the target user.

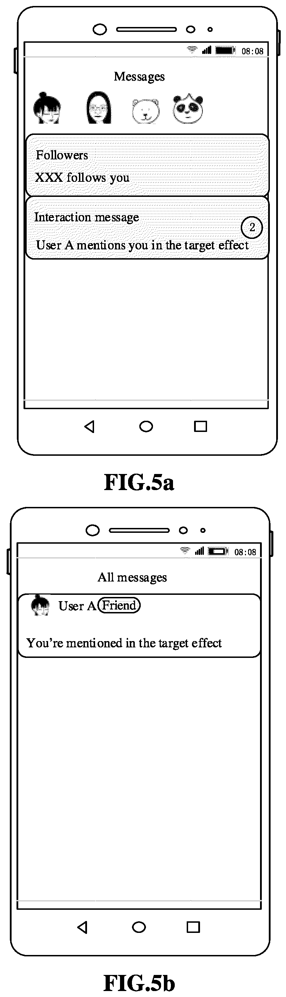

As shown in FIG. 5a, an interaction message card is displayed in the message notification page, wherein the card may be used to display the number of interaction messages and the latest received user interaction message. As shown in FIG. 5a, the number of interaction messages is 2, and the latest received user interaction message mainly comprise: an interaction user name and a target effect, e.g., "User A mentions you in the target effect".

As shown in FIG. 5b, an interaction message card is displayed in the message notification page, wherein the card displays an interaction user's profile photo, name, relationship with the target user, as well as a user interaction message. The card further comprises a link to a target media content; in response to a trigger operation on the link to the target media content, the target media content is played. Further, the user interaction message comprises: you are mentioned in the target effect, e.g., "You're mentioned in the target effect".

In the embodiments of the present disclosure, after the current user uses the association information of the target user in the target media content, a user interaction message will be generated and sent to the target user, thereby enhancing the interactivity between the two users.

Based on the foregoing embodiments, the embodiments of the present disclosure further optimize the manner of determining the target user.

In an implementation of the present disclosure, obtaining the one or more object identifications corresponding to candidate users associated with the target effect comprises: obtaining one or more object identifications corresponding to candidate users associated with the target effect in response to receiving an effecting adding request instruction.

In the embodiments of the present disclosure, as shown in FIG. 3, the media content editing interface comprises an effect selecting control 34. In response to a trigger operation on the effect selecting control 34, an effect selecting area 35 is displayed, the effect selecting area 35 comprising various available effect controls. In response to a trigger operation on a target effect control 36, obtaining one or more object identifications corresponding to candidate users associated with the target effect is obtained in response to receiving an effect adding request instruction.

In an implementation of the present disclosure, determining, in response to the selection operation of the current user, the candidate user corresponding to the at least one selected object identification as the target user comprises: displaying an object identification selecting area in the media content editing interface, wherein the object identification selecting area comprises an object identification corresponding to one or more initial display users, the initial display users being comprised in the candidate users; and determining, in response to receiving an effect adding confirmation instruction, the candidate user corresponding to the one or more object identifications selected in the object identification selecting area as the target user.

In the embodiments of the present disclosure, as shown in FIG. 3, in response to receiving an effect adding instruction, one or more object identifications corresponding to candidate users associated with the target effect is obtained, a preset number of users are selected from the candidate users as initial display users and displayed in an object identification selecting area 37 in the media content editing interface.

It is to be noted that as shown in FIG. 3, object identifications (e.g., user profile photos or aliases) corresponding to the initial display users are displayed in the form of a row in the object identification selecting area 37, whereas the embodiments of the present disclosure are not intended to limit the manner of displaying the object identifications.

In the embodiments of the present disclosure, the initial display user refers to a user satisfying a preset condition as selected from candidate users, wherein satisfying the preset condition may be a user with a relevance to the current user being greater than a display threshold, and further may be a preset number of users with a relevance to the current user being ranked on top. The preset number may be set, optionally, 20.

It is to be noted that the preset number is less than the candidate threshold in the foregoing embodiments.

In the embodiments of the present disclosure, the media content editing interface comprises an effect confirmation control 38. In response to a trigger operation of the current user on the effect confirmation control 38, the candidate user corresponding to the one or more object identifications selected in the object identification selecting area is determined as the target user.

In an implementation of the present disclosure, displaying the one or more object identifications in the media content editing interface comprises: obtaining association information corresponding to one or more candidate users in response to receiving an object identification adding instruction; determining a preset number of candidate users as initial display users based on the association information; and displaying an object identification of the initial display user in the media content editing interface.

The association information comprises a relevance of a candidate user to the current user.

In an implementation of the present disclosure, receiving the object identification adding instruction may be receiving a trigger operation of the current user on the object identification adding control in the media content editing interface, and further may be receiving a trigger operation of the current user on the association information display area in the target effect area.

In the embodiments of the present disclosure, a relevance of one or more candidate users to the current user is obtained, and a preset number of candidate users with a relevance to the current user being ranked on top are determined as the initial display users.

In the embodiment of the present disclosure, a relevance corresponding to the selected users are obtained, and the relevance is arranged in descending order, and the selected users with a preset number of items in the front order are used as the initial display users. For example, the top 20 users in the ranking are selected as the initial display users.

In the embodiments of the present disclosure, the interactivity between users may be further increased by obtaining users with a higher relevance as the initial display users.

In an implementation of the present disclosure, the method further comprises: in response to the number of candidate users being less than the preset number, determining all the candidate users as the initial display users.

In the embodiments of the present disclosure, if the number of candidate users is less than the preset number, then all the candidate users are determined as the initial display users. For example, if the number of friends of the current user following each other is less than 20, then all the friends of the current user are determined as the initial display users.

In an implementation of the present disclosure, the embodiments of the present disclosure further optimize the manner of determining the target user.

Specifically, in an implementation of the present disclosure, determining, in response to the selection user of the current user, the candidate user corresponding to the at least one selected object identification as the target user comprises: obtaining the one or more candidate users in response to receiving an object identification adding instruction; displaying an associated user display page of the current user, wherein the associated user display page comprises one or more candidate users; and obtaining, in response to a selection operation on the candidate user, the selected candidate user as the target user.

In an implementation of the present disclosure, the associated user display page of the current user may be understood as a display page of a user having a preset association relationship with the current user, such as a friend display page, a following display page, a follower display page, etc.

In the embodiments of the present disclosure, the selection operation on the candidate user may be simultaneously selecting a plurality of candidate users in the associated user display page as the target user.

In the embodiments of the present disclosure, the display of the associated user display page can be displayed as a panel or a mask area in the media content editing interface, or as a separate page. For example: in response to receiving an add instruction of an object identification, it jumps to the existing friend list page (the associated user display page of the current user)

In the embodiments of the present disclosure, one or more candidate users may be sequentially selected in the associated user display page as the target user.

In an implementation of the present disclosure, the embodiments of the present disclosure further optimize the manner of determining the target user.

Specifically, the object identification selecting area or the following display area comprises one or more user group identifications; determining, in response to the selection operation of the current user, the candidate user corresponding to the at least one selected object identification as the target user further comprises: determining, in response to the selection operation on the user group identifications, that a user group corresponding to the selected user group identifications comprises one or more candidate users; and determining the selected one or more candidate users as the target user.

In the embodiments of the present disclosure, the user grouping identification refers to an identification for grouping users set by the current user, wherein a user grouping identification corresponds to a certain type of candidate users, for example, the user grouping identifications may comprise colleagues, classmates and so on. The user grouping identifications may be set by the current user. Optionally, the user grouping identification may further be a user group identification. A user grouping comprises one or more candidate users.

Specifically, if the user grouping identifications is friends, then in response to a trigger operation on the grouping identifications friend, all the one or more candidate users identified as friends is determined as the target user.

Specifically, if a user group is classmates, then in response to a selection operation on the user group, all candidate users in the user group are determined as the target user.

In an implementation of the present disclosure, the embodiments of the present disclosure further optimize the manner of determining the target user.

Specifically, determining, in response to the selection operation of the current user, the candidate user corresponding to the at least one selected object identification as the target user comprises: in response to receiving a user search instruction, wherein the user search instruction comprises a user keyword; searching, based on the user keyword, to obtain one or more candidate users; displaying a search result display page, wherein the search result display page comprises the one or more candidate users; and determining, in response to the selection operation on the candidate user, the selected candidate user as the target user.

The received user search instruction refers to an instruction about the user searching for user association information, and the user keyword refers to user association information to be searched for as input by the current user. The user keyword may be a name of the target user or a part of the name, and may further be a part of the public profile of the target user.

In the embodiments of the present disclosure, the media content editing interface comprises a user search control. In response to an input operation on the user search control, a user keyword corresponding to the input operation is received. In response to receiving a search confirmation instruction, a search is performed based on the user keyword, a user obtained from a search result is determined as a candidate user, and an object identification corresponding to the candidate user is displayed in the media content editing interface. In response to a selection operation on the candidate user, the selected candidate user is determined as the target user.

In an implementation of the present disclosure, the embodiments of the present disclosure further optimize the manner of determining the target user.

Specifically, the method further comprises: deleting, in response to receiving an object identification deleting instruction, a candidate user corresponding to the deleting instruction from the target user. Various manners of determining the target user have been provided in the foregoing embodiments. This embodiment provides a manner of deleting the target user. Specifically, receiving an object identification deleting instruction may be a deselecting operation on the object identification in the object identification area.

Based on the foregoing embodiment, an introduction is presented to the ranking order of target users in the embodiments of the present disclosure. Specifically, the object identification selecting area or the associated user display page displays selection information of the selected target user, the selection information comprising ranking order information of the selected target user.

In the embodiments of the present disclosure, the object identification selecting area displays selection information of the selected target user, wherein the selection information may be displayed in the form of a marker, for example, a green or red marker displayed in the upper right corner.

Further, the selection information comprises ranking order information of the selected target user. Specifically, a ranking position of a target user corresponding to an object identification is displayed in the upper left corner of the object identification, wherein the ranking position is displayed in the form of a number.

In an implementation of the present disclosure, an appearing order of an object identification corresponding to the target user in the media content editing interface is consistent with the ranking order.

For example, the ranking order of a target user is 1, then the association information of the target user will be the first to be displayed in the target effect. If the ranking order of a target user is N, then the association information of the target user will be the Nth to be displayed in the target effect.

In an implementation of the present disclosure, after obtaining the candidate user corresponding to the at least one selected object identification as the target user, the association information display method further comprises: in response to receiving an object identification order adjusting instruction, based on the object identification order adjusting instruction, adjusting a display of the ranking order or adjusting a ranking order, in the object identification selecting area, of an object identification corresponding to the candidate user.

In the embodiments of the present disclosure, receiving the object identification order adjusting instruction may be, determining, in response to a dragging operation after a long press on the object identification by the current user, a target position of the object identification based on a trajectory of the dragging operation.

In the embodiments of the present disclosure, receiving the object identification order adjusting instruction may be receiving modification information of the ranking order in the selection information.

In the embodiments of the present disclosure, after receiving the object identification order adjusting instruction, the ranking order information of the object identification of the target user is modified, e.g., the ranking sequence number 1 is modified to 5.

In the embodiments of the present disclosure, after receiving the object identification order adjusting instruction, the ranking order of the object identification corresponding to the candidate user in the object identification selecting area is adjusted, e.g., the target user ranked in the first position is adjusted to the fifth position.

In the embodiments of the present disclosure, the current user may adjust the order of an object identification, thereby realizing the appearing order of the association information in the target effect and improving the operability of the effect.

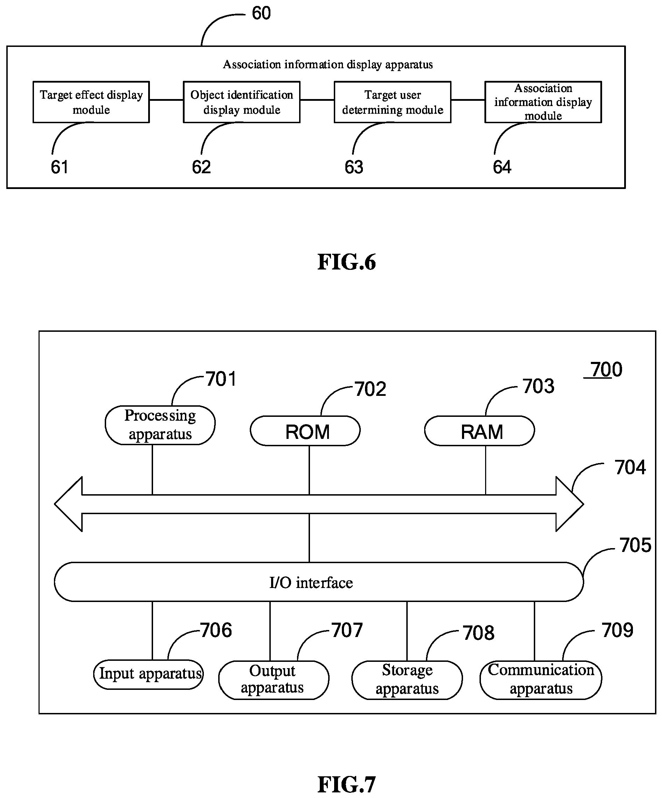

FIG. 6 is a structural schematic diagram of an association information display apparatus in an embodiment of the present disclosure. This embodiment is applicable in the case of adding association information of other users in the media content editing interface, and association information display apparatus may be implemented as software and/or hardware.

As shown in FIG. 6, the association information display apparatus provided by the embodiment of the present disclosure mainly comprises a target effect display module 61, an object identification display module 62, a target user determining module 63 and an association information display module 64.

The target effect display module 61 is configured to display a target effect in a media content editing interface; the object identification display module 62 is configured to obtain one or more object identifications corresponding to candidate users associated with the target effect, and display the one or more object identifications in the media content editing interface; the target user determining module 63 is configured to determine, in response to a selection operation of a current user, a candidate user corresponding to at least one selected object identification as a target user; and the association information display module 64 is configured to display association information of the one or more target users in the target effect in the media content editing interface.

The embodiment of the present disclosure provides an association information display apparatus, mainly configured to perform a flow as follows: displaying a target effect in a media content editing interface; obtaining an object identification corresponding to one or more candidate users associated with the target effect, and displaying the one or more object identifications in the media content editing interface; determining, in response to a selection operation of a current user, a candidate user corresponding to at least one selected object identification as a target user; and displaying association information of the one or more target users in the target effect in the media content editing interface. In the embodiment of the present disclosure, at least one target user is obtained through a selection operation of a current user, and association information of the target user is displayed in the media content editing interface, thereby realizing interaction between the current user and the target user and enhancing interactivity of media content applications.

In an implementation of the present disclosure, the apparatus further comprises: a target media content obtaining module configured to obtain a target media content by performing media content obtaining in response to receiving a media content obtaining instruction; a target media content posting module configured to post the target media content in response to receiving a media content posting instruction; and an interaction message sending module configured to trigger a generation of a user interaction message in response to the target media content being successfully posted, and send the user interaction message to the target user.

In an implementation of the present disclosure, the object identification display module 62 comprises an object identification obtaining unit configured to obtain one or more object identifications corresponding to candidate users associated with the target effect in response to receiving an effect adding request instruction.

In an implementation of the present disclosure, the target user determining module 63, when determining, in response to the selection operation of the current user, the candidate user corresponding to the at least one selected object identification as the target user, comprises: an object identification area display unit configured to display an object identification selecting area in the media content editing interface, wherein the object identification selecting area comprises an object identification corresponding to one or more initial display users, the initial display users being comprised in the candidate users; and a target user determining unit configured to determine, in response to receiving an effect adding confirmation instruction, the candidate user corresponding to the one or more object identifications selected in the object identification selecting area as the target user.

In an implementation of the present disclosure, the object identification display module 62 comprises: an association information display unit configured to obtain association information corresponding to one or more candidate users in response to receiving an object identification adding instruction; an initial user display unit configured to determine a preset number of candidate users as initial display users based on the association information; and an object identification display unit configured to display an object identification of the initial display user in the media content editing interface.

In an implementation of the present disclosure, the initial user display unit is further configured to, in response to the number of candidate users being less than the preset number, determine all the candidate users as the initial display users.

In an implementation of the present disclosure, the target user determining module 63 comprises: a candidate user determining unit configured to obtain the one or more candidate users in response to receiving an object identification adding instruction; an associated user display page display unit configured to display an associated user display page of the current user, wherein the associated user display page comprises one or more candidate users; and a target user determining unit configured to obtain, in response to a selection operation on the candidate user, the selected candidate user as the target user.

In an implementation of the present disclosure, the object identification selecting area or the following display page comprises one or more user group identifications; and the target user determining unit is further configured to: determine, in response to the selection operation on the user group identification, that a user group corresponding to the selected user group identification comprises one or more candidate users; and determine the selected one or more candidate users as the target user.

In an implementation of the present disclosure, the target user determining module 63 comprises: a search instruction responding unit configured to respond to receiving a user search instruction, wherein the user search instruction comprises a user keyword; a user search unit configured to search, based on the user keyword, to obtain one or more candidate users; a search result display unit configured to display a search result display page, wherein the search result display page comprises the one or more candidate users; and a target user determining unit configured to determine, in response to the selection operation on the candidate user, the selected candidate user as the target user.

In an implementation of the present disclosure, the apparatus further comprises: a user deleting module configured to delete, in response to receiving an object identification deleting instruction, a candidate user corresponding to the deleting instruction from the target user.

In an implementation of the present disclosure, the object identification selecting area or the associated user display page displays selection information of the selected target user, the selection information comprising ranking order information of the selected target user.

In an implementation of the present disclosure, the apparatus further comprises: an order adjusting module configured to adjust, in response to receiving an object identification order adjusting instruction, based on the object identification order adjusting instruction, a display of the ranking order or adjusting a ranking order, in the object identification selecting area, of an object identification corresponding to the candidate user.

In an implementation of the present disclosure, an appearing order of an object identification corresponding to the target user in the media content editing interface is consistent with the ranking order.

In an implementation of the present disclosure, the current user has a preset association relationship with the candidate user.

In an implementation of the present disclosure, the apparatus further comprises: a topic control display module configured to display a topic selecting control and/or a topic input control associated with the target effect; a target topic determining module configured to determine a target topic in response to a trigger operation of a current user on the topic selecting control and/or the topic input control; and a target topic display module configured to display the target topic in the target effect in the media content editing interface.

In an implementation of the present disclosure, the association information of the target user displayed in the target effect varies with an interaction effect of the target effect.

In an implementation of the present disclosure, the association information display module 64, when displaying the association information of the one or more target users in the target effect in the media content editing interface, comprises at least one of: displaying, within a preset time range, the association information corresponding to the one or more target users in the target effect in the media content editing interface; displaying the association information of the one or more target users in the target effect in the media content editing interface in response to receiving a preset trigger operation of the current user on the media content editing interface; and displaying the association information of the one or more target users in the target effect in the media content editing interface in response to a currently captured image satisfying a preset condition.

The association information display apparatus provided by the embodiment of the present disclosure can perform the steps of the association information display method provided by the method embodiments of the present disclosure, which includes corresponding functional modules for performing the method and has the advantageous effects. Details are not repeated herein.

FIG. 7 is a structural schematic diagram of an electronic device provided by an embodiment of the present disclosure. With reference to FIG. 7 below, this figure shows a structural schematic diagram of an electronic device 700 which is applicable to implement the embodiments of the present disclosure. The electronic device 700 in the embodiment of the present disclosure may include a mobile terminal such as a mobile phone, a notebook computer, a digital broadcast receiver, a PDA (personal digital assistant), a PAD (portable Android device), a PMP (portable multimedia player), an on-board terminal (e.g., an on-board navigation terminal), a wearable terminal device and the like, and a fixed terminal such as digital TV, a desktop computer, a smart home device and the like. The electronic device shown in FIG. 7 is merely an example and should not be construed as bringing any restriction on the functionality and usage scope of the embodiments of the present disclosure.

As shown in FIG. 7, the electronic device 700 may comprise a processing apparatus (e.g., a central processor, a graphics processor) 701 which is capable of performing various appropriate actions and processes as described in the embodiments of the present disclosure in accordance with programs stored in a read only memory (ROM) 702 or programs loaded from a storage apparatus 708 to a random-access memory (RAM) 703. In the RAM 703, there are also stored various programs and data required by the electronic device 700 when operating. The processing apparatus 701, the ROM 702 and the RAM 703 are connected to one another via a bus 704. An input/output (I/O) interface 705 is also connected to the bus 704.

Typically, the following units may be connected to the I/O interface 705: an input apparatus 706 including, for example, a touchscreen, a touch pad, a keyboard, a mouse, a camera, a microphone, an accelerometer, a gyroscope and the like; an output apparatus 707 including, for example, a Liquid Crystal Display (LCD), a loudspeaker, a vibrator and the like; a storage apparatus 708 including, for example, a tape, a hard drive and the like; and a communication apparatus 709. The communication apparatus 709 can allow wireless or wired communication of the electronic device 700 with other devices to exchange data. Although FIG. 7 shows the terminal device 700 with various apparatuses, it should be understood that it is not required to implement or have all of the illustrated apparatuses. Alternatively, more or less apparatuses may be implemented or exist.

In particular, according to embodiments of the present disclosure, the processes described above with reference to the flowcharts may be implemented as computer software programs. For example, embodiments of the present disclosure include a computer program product comprising a computer program carried on a non-transitory computer readable medium, the computer program containing program code for performing the methods as in the flowcharts. In those embodiments, the computer program may be downloaded and installed from a network via the communication apparatus 709, or may be installed from the storage apparatus 708, or may be installed from the ROM 702. The computer program, when executed by the processing apparatus 701, performs the above-described functions defined in the virtual resource processing method according to the embodiments of the present disclosure.

It is to be noted that the computer readable medium according to the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a RAM, an ROM, an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain, or store, a program for use by or in connection with an instruction execution system, apparatus, or device. In contrast, in the present disclosure, a computer readable signal medium may include a propagated data signal with computer readable program code embodied therein, either in baseband or as part of a carrier wave. Such propagated data signal may take many forms, including, but not limited to, an electro-magnetic signal, an optical signal, or any suitable combination thereof. A computer readable signal medium may also be any computer readable medium that is not a computer readable storage medium and that can communicate, propagate, or transmit a program for use by or in connection with an instruction execution system, apparatus, or device. Program code embodied on a computer readable medium may be transmitted using any appropriate medium, including but not limited to: electrical wires, optical cables, RF (radio frequency), etc., or any suitable combination of the foregoing.

In some implementations, the client and the server may perform communication by using any known network protocol such as Hyper Text Transfer Protocol (HTTP) or any network protocol to be developed, and may connect with digital data in any form or carried in any medium (for example, a communication network). The communication network includes a local area network (LAN), a wide area network (WAN), an international network (for example, the internet), a peer-to-peer network (e.g. ad hoc peer-to-peer network), and any known network or network to be developed.

The computer readable medium may be the one included in the electronic device, or may be provided separately, rather than assembled in the electronic device.

The computer readable medium carries one or more programs which, when executed by the electronic device, cause the electronic device to: display a target effect in a media content editing interface; obtain an object identification corresponding to one or more candidate users associated with the target effect, and displaying the one or more object identifications in the media content editing interface; determine, in response to a selection operation of a current user, a candidate user corresponding to at least one selected object identification as a target user; and display association information of the one or more target users in the target effect in the media content editing interface.

Optionally, when the one or more programs are executed by the terminal device, the terminal device may further perform other steps described in the foregoing embodiments.

Computer program codes for carrying out operations of the present disclosure may be written in one or more programming languages, including without limitation to, an object-oriented programming language such as Java, Smalltalk, C++ or the like, and conventional procedural programming languages, such as the "C" programming language or similar programming languages. The program codes may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the figures illustrate the architecture, functionality, and operation of possible implementations of systems, methods and computer program products according to various implementations of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units described in the embodiments of the present disclosure may be implemented as software or hardware, wherein the name of a unit does not form any limitation to the unit per se in some case.

The functions described above may be executed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

In the context of the present disclosure, the machine-readable medium may be a tangible medium, which may include or store a program used by an instruction executing system, apparatus or device or used in conjunction with the foregoing. The machine-readable medium may be a machine-readable signal medium or a machine-readable storage medium. The machine-readable medium may include, but is not limited to, an electronic, magnetic, optical, electromagnetic, infrared, semiconductor system, means or device, or any suitable combination of the foregoing. More specific examples of the machine-readable storage medium include the following: an electric connection with one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

According to one or more embodiments of the present disclosure, an association information display method is provided, comprising: displaying a target effect in a media content editing interface; obtaining one or more object identification corresponding to candidate users associated with the target effect, and displaying the one or more object identifications in the media content editing interface; determining, in response to a selection operation of a current user, a candidate user corresponding to at least one selected object identification as a target user; and displaying association information of the one or more target users in the target effect in the media content editing interface.

According to one or more embodiments of the present disclosure, an association information display apparatus is provided, comprising: a target effect display module configured to display a target effect in a media content editing interface; an object identification display module configured to obtain one or more object identifications corresponding to candidate users associated with the target effect, and display the one or more object identifications in the media content editing interface; a target user determining module configured to determine, in response to a selection operation of a current user, a candidate user corresponding to at least one selected object identification as a target user; and an association information display module configured to display association information of the one or more target users in the target effect in the media content editing interface.

According to one or more embodiments of the present disclosure, an electronic device is provided, comprising:
one or more processors;
a memory configured to store one or more programs,
wherein, the one or more programs, when executed by the one or more processors, cause the one or more processors to implement an association information display method as provided in the present disclosure.

According to one or more embodiments of the present disclosure, a computer readable storage medium is provided, storing a computer program thereon. The program, when executed by a processor, implements an association information display method as provided in the present disclosure.

The embodiments of the present disclosure further provide a computer program product, comprising computer programs or instructions. The computer programs or instructions, when executed by a processor, implement an association information display method as described above.

The foregoing description merely illustrates the preferable embodiments of the present disclosure and used technical principles. Those skilled in the art should understand that the scope of the present disclosure is not limited to technical solutions formed by specific combinations of the foregoing technical features and also cover other technical solution formed by any combinations of the foregoing or equivalent features without departing from the concept of the present disclosure, such as a technical solution formed by replacing the foregoing features with the technical features disclosed in the present disclosure (but not limited to) with similar functions.

In addition, although various operations are depicted in a particular order, this should not be construed as requiring that these operations be performed in the particular order shown or in a sequential order. In a given environment, multitasking and parallel processing may be advantageous. Likewise, although the above discussion contains several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or method logical acts, it is to be understood that the subject matter defined in the appended claims is not necessarily limited to the specific features or acts described above. On the contrary, the specific features and acts described above are merely example forms of implementing the claims.

## Claims

1. An association information display method, comprising:
displaying a target effect in a media content editing interface;
obtaining one or more object identifications corresponding to candidate users associated with the target effect, and displaying the one or more object identifications in the media content editing interface;
determining, in response to a selection operation of a current user, a candidate user corresponding to at least one selected object identification as a target user; and
displaying association information of the one or more target users in the target effect in the media content editing interface.

2. The method of claim 1, further comprising:
obtaining a target media content by performing media content obtaining in response to receiving a media content obtaining instruction;
posting the target media content in response to receiving a media content posting instruction; and
in response to the target media content being successfully posted, triggering a generation of a user interaction message and sending the user interaction message to the target user.

3. The method of claim 1, wherein obtaining the one or more object identifications corresponding to the candidate users associated with the target effect comprises:
obtaining the one or more object identifications corresponding to candidate users associated with the target effect in response to receiving an effecting adding request instruction.

4. The method of claim 3, wherein determining, in response to the selection operation of the current user, the candidate user corresponding to the at least one selected object identification as the target user comprises:
displaying an object identification selecting area in the media content editing interface, wherein the object identification selecting area comprises one or more object identifications corresponding to initial display users, the initial display users being comprised in the candidate users; and
determining, in response to receiving an effect adding confirmation instruction, the candidate user corresponding to the one or more object identifications selected in the object identification selecting area as the target user.

5. The method of claim 1, wherein displaying the one or more object identifications in the media content editing interface comprises:
obtaining association information corresponding to one or more candidate users in response to receiving an object identification adding instruction;
determining a preset number of candidate users as initial display users based on the association information; and
displaying object identifications of the initial display users in the media content editing interface.

6. The method of claim 5, further comprising:
in response to the number of candidate users being less than the preset number, determining all the candidate users as the initial display users.

7. The method of claim 1, wherein determining, in response to the selection user of the current user, the candidate user corresponding to the at least one selected object identification as the target user comprises:
obtaining the one or more candidate users in response to receiving an object identification adding instruction;
displaying an associated user display page of the current user, wherein the associated user display page comprises one or more candidate users; and
obtaining, in response to a selection operation on the candidate user, the selected candidate user as the target user.

8. The method of claim 4 or 7, wherein the object identification selecting area or the follow display page comprises one or more user group identifications; and determining, in response to the selection operation of the current user, the candidate user corresponding to the at least one selected object identification as the target user further comprises:
determining, in response to the selection operation on the user group identification, that a user group corresponding to the selected user group identification comprises one or more candidate users; and
determining the selected one or more candidate users as the target user.

9. The method of claim 1, wherein determining, in response to the selection operation of the current user, the candidate user corresponding to the at least one selected object identification as the target user comprises:
in response to receiving a user search instruction, wherein the user search instruction comprises a user keyword:
searching, based on the user keyword, to obtain one or more candidate users;
displaying a search result display page, wherein the search result display page comprises the one or more candidate users; and
determining, in response to the selection operation on the candidate user, the selected candidate user as the target user.

10. The method of claim 1, further comprising:
deleting, in response to receiving an object identification deleting instruction, a candidate user corresponding to the deleting instruction from the target user.

11. The method of claim 4 or 7, wherein the object identification selecting area or the associated user display page displays selection information of the selected target user, the selection information comprising ranking order information of the selected target user.

12. The method of claim 11, further comprising:
in response to receiving an object identification order adjusting instruction, based on the object identification order adjusting instruction, adjusting a display of the ranking order information or adjusting a ranking order, in the object identification selecting area, of an object identification corresponding to the candidate user.

13. The method of claim 11, wherein an appearing order of an object identification corresponding to the target user in the media content editing interface is consistent with the ranking order information.

14. The method of any of claims 1-13, wherein the current user has a preset association relationship with the candidate user.

15. The method of claim 1, further comprising:
displaying a topic selecting control and/or a topic input control associated with the target effect;
determining a target topic in response to a trigger operation of a current user on the topic selecting control and/or the topic input control; and
displaying the target topic in the target effect in the media content editing interface.

16. The method of claim 1, wherein the association information of the target user displayed in the target effect varies with an interaction effect of the target effect.

17. The method of claim 1, wherein displaying the association information of the one or more target users in the target effect in the media content editing interface comprises at least one of:
displaying, within a preset time range, the association information corresponding to the one or more target users in the target effect in the media content editing interface;
displaying the association information of the one or more target users in the target effect in the media content editing interface in response to receiving a preset trigger operation of the current user on the media content editing interface; and
displaying the association information of the one or more target users in the target effect in the media content editing interface in response to a currently captured image satisfying a preset condition.

18. An association information display apparatus, comprising:
a target effect display module configured to display a target effect in a media content editing interface;
an object identification display module configured to obtain one or more object identifications corresponding to candidate users associated with the target effect, and display the one or more object identifications in the media content editing interface;
a target user determining module configured to determine, in response to a selection operation of a current user, a candidate user corresponding to at least one selected object identification as a target user; and
an association information display module configured to display association information of the one or more target users in the target effects in the media content editing interface.

19. An electronic device, comprising:
one or more processors;
a storage unit storing one or more programs; wherein
the one or more programs, when executed by the one or more processors, cause the one or more processors to implement the method of any of claims 1-17.

20. A computer readable storage medium storing computer programs thereon, wherein the programs, when executed by a processor, implements the method of any of claims 1-17.

21. A computer program product comprising computer programs or instructions, wherein the computer programs or instructions, when executed by a processor, implement the method of any of claims 1-17.
